Europäisches Patentamt

European Patent Office

Office européen des brevets

(11) Publication number: **0 428 134 A2**

# EUROPEAN PATENT APPLICATION

(21) Application number: **90121714.1**

(22) Date of filing: **13.11.90**

(51) Int. Cl.5: **G06F 15/20**

(30) Priority: **13.11.89 JP 294743/89**

(43) Date of publication of application:
**22.05.91 Bulletin 91/21**

(84) Designated Contracting States:
**DE GB**

(71) Applicant: **Komatsu Ltd.**
**Komatsu Bldg. 2-3-6 Akasaka,**
**Minato-ku Tokyo 107(JP)**

Applicant: **YAMATAKE-HONEYWELL CO. LTD.**
**12-19 Shibuya 2 Chome Shibuya-Ku**

**Tokyo 150(JP)**

(72) Inventor: **Miyata, Hiroshi**
**132, Aojimachi**
**Komatsu-city, Ishikawa(JP)**
Inventor: **Ashikawa, Takeshi**
**2-14-15. Nishiyawata**
**Hiratsuka-city, Kanagawa(JP)**

(74) Representative: **Kahler, Kurt, Dipl.-Ing.**
**Postfach 1249 Gerberstrasse 3**
**W-8948 Mindelheim(DE)**

(54) **Fault diagnosing apparatus and method.**

(57) A fault diagnosing apparatus includes a fault tree, a storage section (3a), a read control section (3), a display section (4), a designating section (3), and a rewrite section (3). The fault tree is designed such that a plurality of choices are set with respect to one question associated with a cause of a fault of a fault diagnosing target, answers and choices branch off from each of the choices, and final choices reach causes of the fault. The storage section (3a) stores fault repair items with respect to the causes of the fault. In response to an input operation to select one of the choices, the read control section (3) reads out the selected choice, a corresponding question, choices branching off therefrom, and fault repair items. The display section (4) displays the question, the choices, and the fault repair items which are read out by the read control section.

FIG.1

# FAULT DIAGNOSING APPARATUS AND METHOD

## Background of the Invention

The present invention relates to a fault diagnosing apparatus for detecting the cause of a fault when a control target in, e.g., a sequence control system failed, and to a corresponding diagnosing method.

In a sequence control system, a control target, such as a plant, a processing apparatus, or an equipment system, is properly operated by controlling a large number of sensors and actuators, e.g., limit switches and solenoid valves, at predetermined timings based on a sequence program using a sequence controller in accordance with signals from various sensors arranged at the respective portions of the control target. In addition, such a system has a function of diagnosing a fault in a control target during an operation. When a fault is detected, the fault is displayed by means of a lamp, a message, or the like.

In the conventional fault diagnosis, therefore, faults are very roughly diagnosed, and the number of items of faults which can be detected is very small. For example, in a press machine or the like, the number of items is about 10 to 250. In addition to fault diagnosis of a control target, fault diagnosis of the above-mentioned sequence controller itself, including a large number of contacts and actuators, various sensors, and the like, is performed. However, in the above-described fault diagnosis function, the display contents of abnormal states are limited to only phenomena, and true causes thereof are not displayed at all.

Furthermore, the sequence program includes a control program and a program for fault diagnosis. The two programs are alternately executed. Therefore, the total capacity of programs is increased to increase a programming load. This may also interfere with the execution of the control program, and pose other problems, e.g., that fault diagnosis cannot be performed at high speed.

In the above-described fault diagnosis function, when a fault is detected, an operation of a control target is stopped as needed and only a message of an abnormal state is displayed. However, more detailed fault diagnosis, e.g., information of the cause of the fault or repair items indicating a repair method of the fault, cannot be informed to a user.

For this reason, when a fault is detected and displayed, an operator in charge of maintenance checks a portion at which the fault has occurred, and also checks an operation manual. The operator then determines the cause of the fault or the repair items and performs a proper operation.

For this purpose, therefore, the operator is required to have experience and skill. In addition, it is generally difficult to properly read a large volume of an operation manual within a short period of time. For this reason, a fault repair may require a long period of time.

Especially when a control target is a manufacturing machine such as a press machine, MTTR (mean time to repair = total time to repair faults/total number of faults to be repaired) is considered as an important factor. That is, it is important to repair a fault within a short period of time. For this purpose, it is very important to detect the cause of a fault within a short period of time.

## Summary of the Invention

The present invention has been made to solve the above problem, and has as its object to provide a fault diagnosing apparatus which can detect the cause of a fault within a short period of time and can inform an operator of repair items indicating a repair method.

In order to achieve the above object, according to the present invention, there is provided a fault diagnosing apparatus comprising a fault tree in which a plurality of choices are set with respect to one question associated with a cause of a fault of a fault diagnosis target, answers and choices branch off from each of the choices, and final choices reach causes of the fault, storage means for storing fault repair items with respect to the causes of the fault, read control means for, in response to an input operation to select one of the choices, reading out the selected choice, a corresponding question, choices branching off therefrom, and fault repair items, and display means for displaying the question, the choices, and the fault repair items which are read out by the read control means.

After one cause of a fault is reached through a fault tree in an interactive mode, one or more repair items indicating a repair method of the fault can be displayed.

## Brief Description of the drawings

Fig. 1 is a block diagram showing a sequence control system using a fault diagnosing apparatus according to the present invention;

Fig. 2 is a view showing an arrangement of data, such as a fault tree, stored in a memory of the apparatus in Fig. 1;

Fig. 3 is a flow chart showing an operation method to be executed by the apparatus in Fig.

1;

Figs. 4 to 9 are views each showing a display screen of a display section used by the apparatus in Fig. 1;

Fig. 10 is a flow chart showing diagnosis processing of the apparatus in Fig. 1; and

Fig. 11 is a flow chart showing another operation method to be executed by the apparatus in Fig. 1.

Description of the Preferred Embodiments

An embodiment of the present invention will be described below with reference to the accompanying drawings.

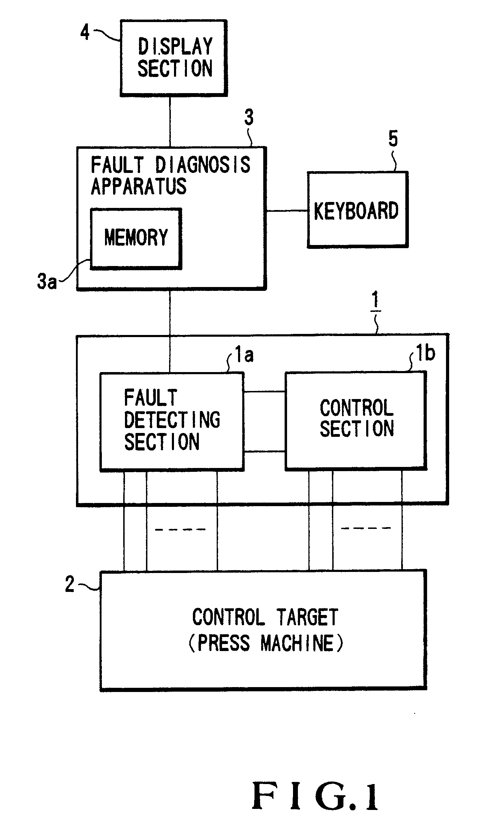

Referring to Fig. 1, reference numeral 1 denotes a sequence controller; 2, a large press machine as a control target to be controlled by the sequence controller 1; 1a, a fault detecting section, of the sequence controller 1, for detecting an abnormal state (fault) of the press machine 2; 1b, a control section, of the sequence controller 1, for controlling an operation of the press machine 2 and roughly detecting a fault; 3, a fault diagnosis apparatus, constituted by a memory 3a, a CPU, and the like, for checking the cause of a fault on the basis of a fault detection signal from the sequence controller 1; 4, a display section, constituted by a CRT or the like and connected to the fault diagnosing apparatus 3, for displaying questions, answers, probabilities, and the like in accordance with the interaction between an operator and the apparatus 3; and 5, a keyboard for inputting an answer selected by the operator with respect to the apparatus 3.

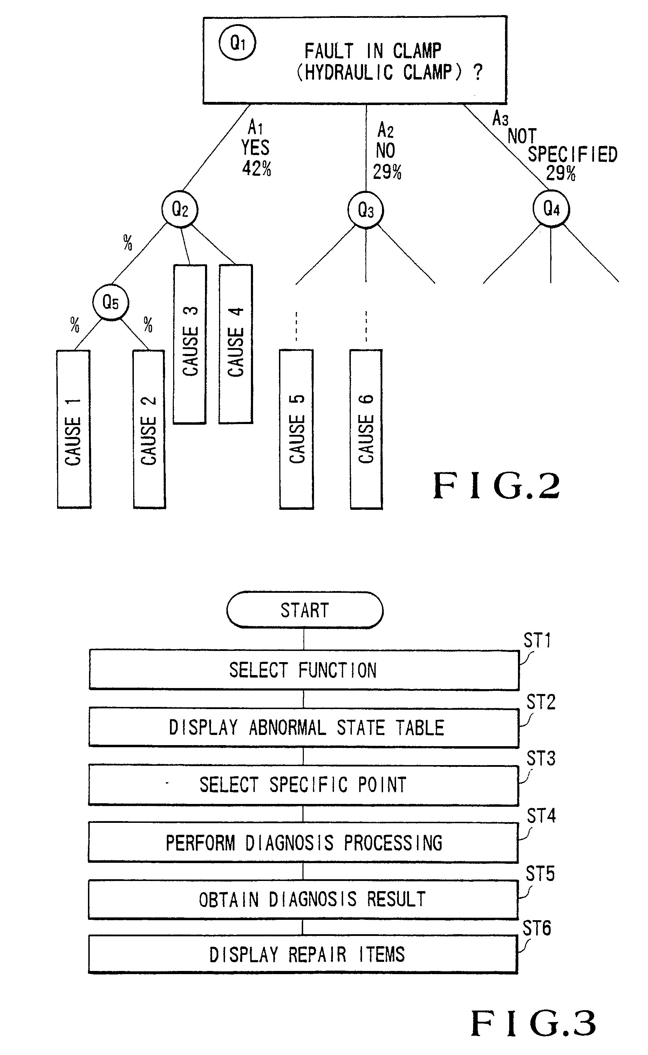

Fig. 2 shows various data including a fault tree and the like registered in the memory 3a.

In this fault tree, a first question $Q_1$ is set in relation to one fault. Three answers $A_1$, $A_2$, and $A_3$ are prepared as choices with respect to the question $Q_1$. Questions $Q_2$, $Q_3$, and $Q_4$ are respectively set after the choices. These questions then branch out into choices. Final choices reach a cause 1, a cause 2, cause 3,.... The memory 3a serves to store data representing the number of times the states of the answers $A_1$, $A_2$, and $A_3$ as the choices constituting the fault tree occur, and data representing the number of times the respective answers are used (selected) in the past.

An operation will be described below with reference to a flow chart in Fig. 3.

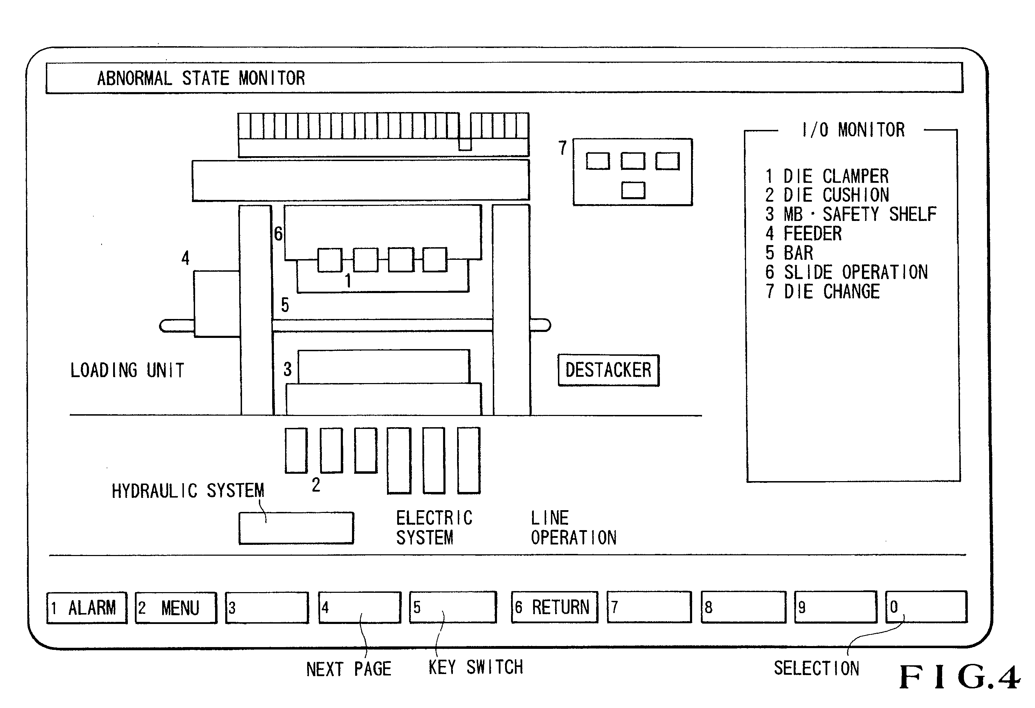

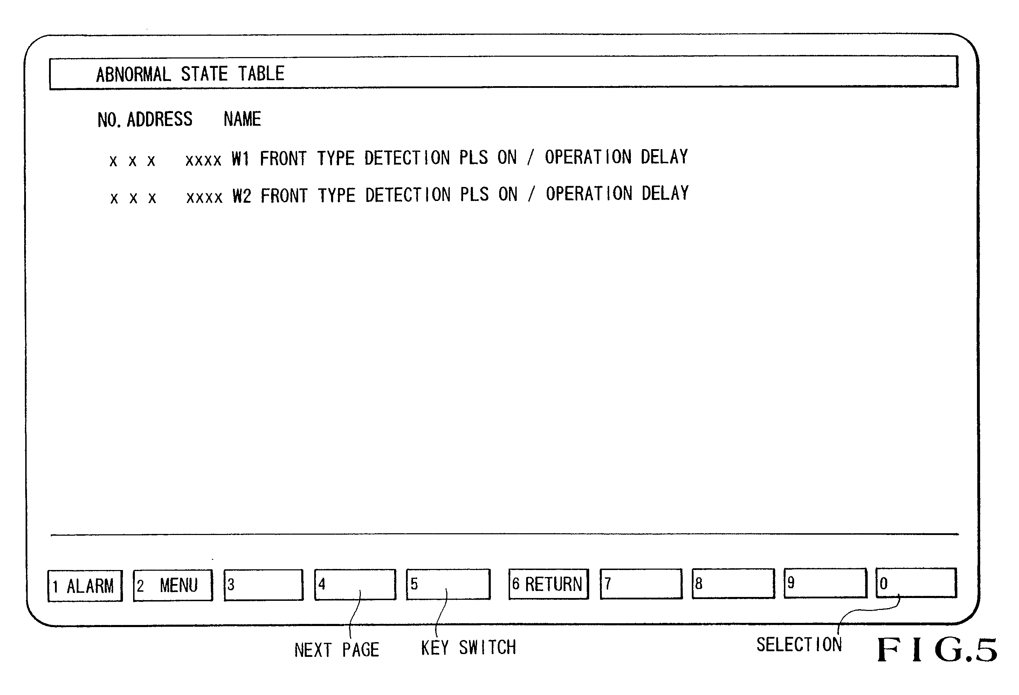

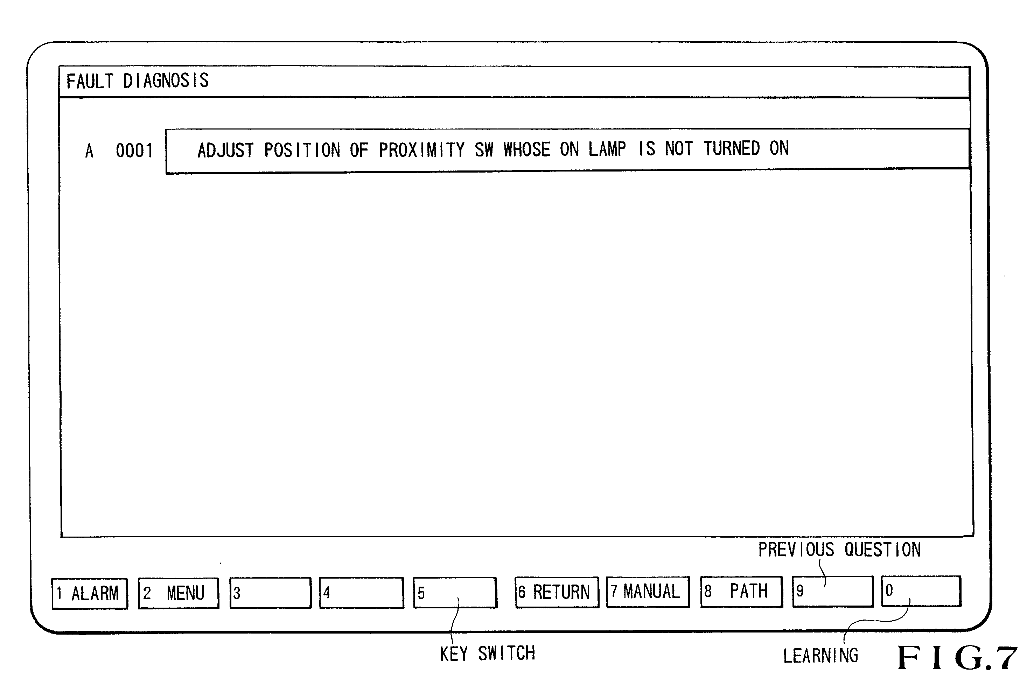

When a fault occurs in the press machine 2, the operator operates the keyboard 5 in step ST1 to select an abnormal state monitor function of the fault diagnosing apparatus. With this operation, a schematic representation of the press machine 2 shown in Fig. 4 is displayed on the display section 4. In this case, the display section 4 displays the occurrence of an abnormal state in a die clamper by changing the display color of hatched portions in Fig. 4. When the keyboard 5 is operated again in step ST2, an abnormal state table shown in Fig. 5 is displayed. When a specific point is designated from this table in step ST3, the flow advances to step ST4 to perform diagnosis processing in which selection of questions and answers is performed in an interactive mode in accordance with the above-mentioned fault tree. With this operation, a diagnosis result, i.e., the cause of the fault can be detected in step ST5. In step ST5, a message shown in Fig. 7 is displayed, and a manual key is designated as one of function keys.

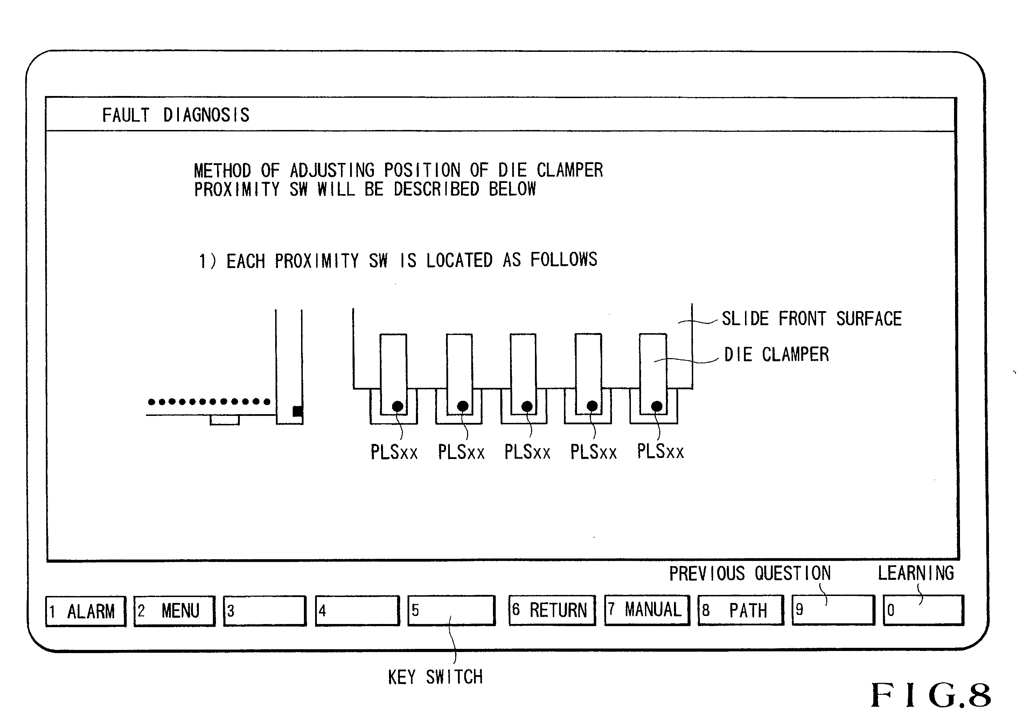

When the manual key designated by the keyboard 5 is depressed, repair items with respect to the cause of a fault are displayed, as shown in Fig. 8.

An operator in charge of repair can perform a repair operation by referring to the above-mentioned repair items.

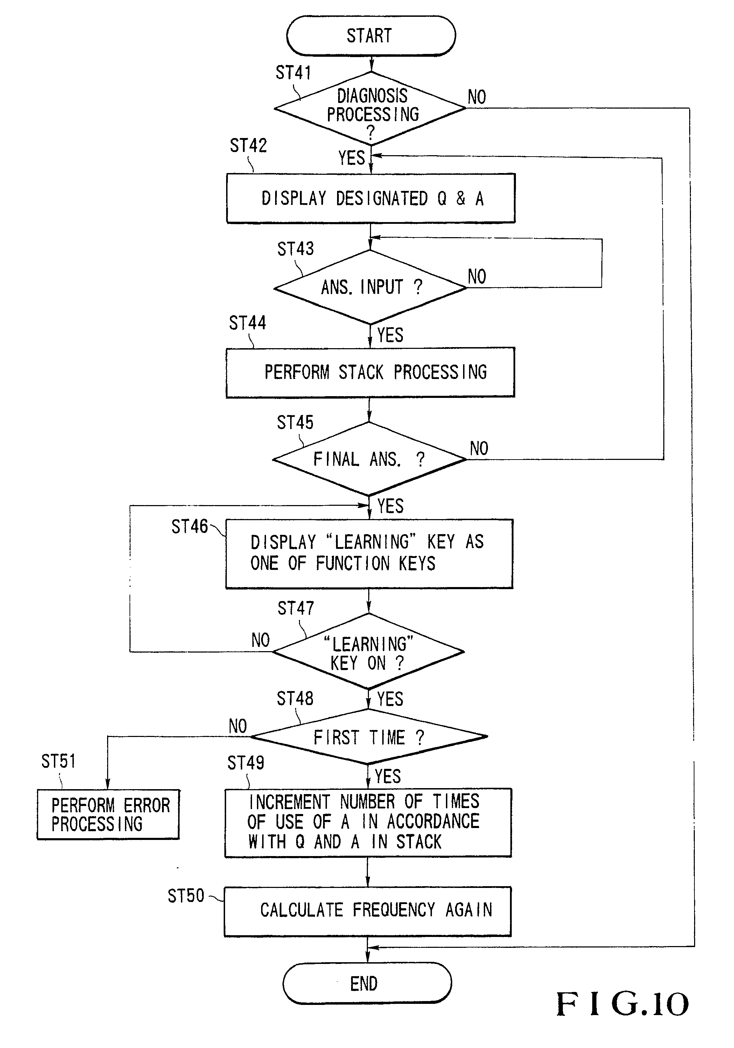

Fig. 10 is a flow chart showing the diagnosis processing in step ST4 in more detail.

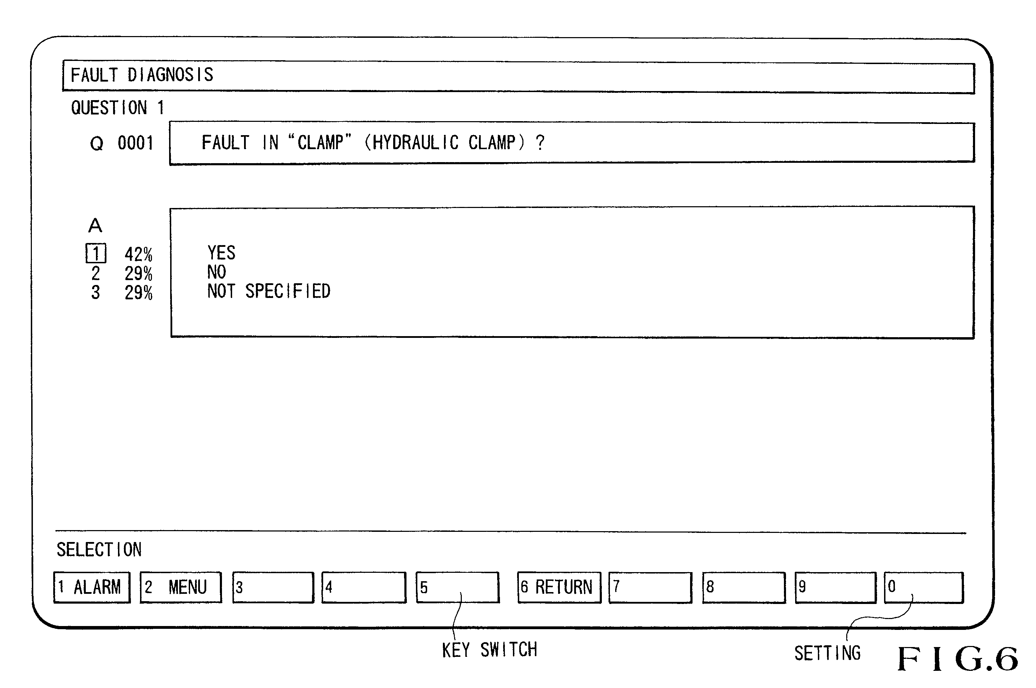

Referring to Fig. 10, it is determined in step ST41 whether diagnosis processing is performed with respect to a specific abnormal state. If the keyboard 5 is operated to perform this processing, the display section 4 displays the first question $Q_1$ (shown in Fig. 2) with respect to the designated point and the probabilities (frequencies) that the states of the answers (choices) $A_1$, $A_2$, and $A_3$ for the question $Q_1$ occur. These probabilities can be arbitrarily set and changed and can be displayed in an arbitrary order instead of displaying them in the order of decreasing values as in Fig. 6.

If the operator selects the answer $A_1$ in step ST43, stack processing is performed in step ST44 to store the selected question $Q_1$ and answer $A_1$. Thereafter, it is checked in step ST45 whether the answer $A_1$ is a final answer. If NO in step ST45, the flow returns to step ST42 to display the next question $Q_2$ and its answers and waits for selection of an answer in step ST43. The above operation is repeated until the flow reaches to a final answer, and a selected question and answer are stored for each operation.

The above-described operation is repeated in accordance with the fault tree until a final answer is obtained. If an answer for a question is erroneously selected, the flow can return to the step for the previous question.

If a final answer, i.e., the cause of the fault, is selected and displayed, a learning key is displayed on the display section 4 as one of function keys in step ST46. If this learning key is depressed once in step ST47, the counts of all the selected answers are updated in the memory 3a in step ST49 through step ST48. Note that if the learning key is consecutively depressed twice, the flow advances to step ST51 to perform error processing. Subsequently, in step ST50, the probabilities of the associated answers are calculated by using the counts updated in step ST49, and the memory 3a is updated on the basis of the calculation result.

As described above, by sequentially updating the above-mentioned probabilities, a learning function is added to the fault diagnosis function. That is, the accuracy of probabilities respectively displayed with respect to a plurality of answers for one question is increased every time diagnosis is performed to facilitate selection by an operator. Therefore, the cause of a fault can be detected within a short period of time.

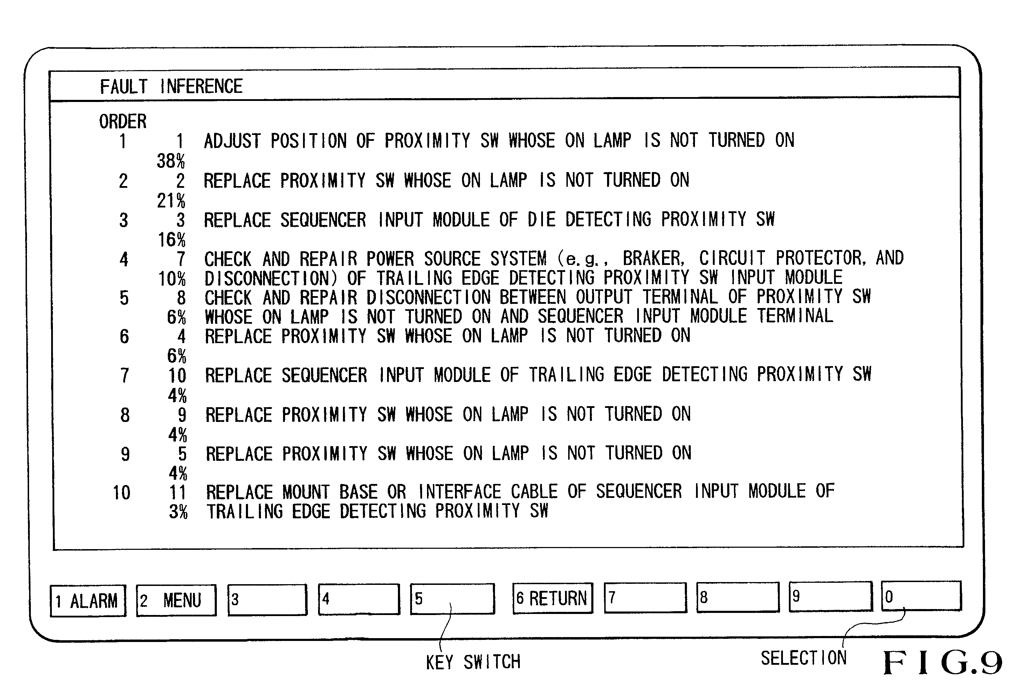

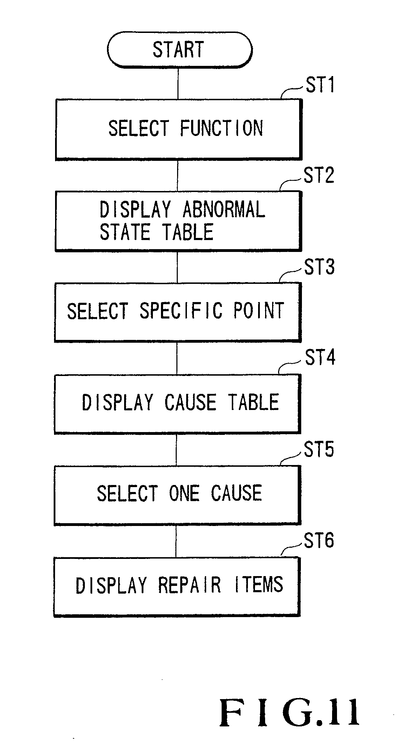

Fig. 11 is a flow chart showing another method of detecting the cause of a fault and fault repair items. Processing in steps ST1 to ST3 is executed in the same manner as described with reference to Fig. 3. When a specific point is selected in step ST3, a plurality of causes associated with the point are displayed together with their probabilities. For example, Fig. 2 shows a case wherein the causes 1, 2, 3, ... associated with the question $Q_1$ with respect to the specific point are displayed in the order of decreasing probabilities, as shown in Fig. 9. When one of the displayed causes is selected in step ST5, the fault repair items shown in Fig. 8 are displayed in step ST6.

According to the above-described method, an interactive operation of following choices of a fault tree one by one can be omitted.

As has been described above, according to the present invention, when selection of questions and answers is performed in the interactive mode by using a fault tree, one cause of a fault is obtained, and fault repair items are displayed. With this arrangement, the cause of a fault can be detected within a short period of time. In addition, repair items for the fault can be detected. Therefore, the above-mentioned MTTR can be increased.

## Claims

1. A fault diagnosing apparatus comprising:
- a fault tree in which a plurality of choices are set with respect to one question associated with a cause of a fault of a fault diagnosing target, answers and choices branch off from each of the choices, and final choices reach causes of the fault;
- storage means (3a) for storing fault repair items. with respect to the causes of the fault;
- read control means (3) for, in response to an input operation to select one of the choices, reading out the selected choice, a corresponding question, choices branching off therefrom, and fault repair items; and

- display means (4) for displaying the question, the choices, and the fault repair items which are read out by the read control means.

2. A fault diagnosing method comprising the steps:
- providing a fault tree in which a plurality of choices are set with respect to one question associated with a cause of a fault of a fault diagnosing target, answers and choices branch off from each of the choices, and final choices reach causes of the fault;
- storing fault repair items with respect to the causes of the fault;
- reading out in response to an input operation to select one of the choices the selected choice, a corresponding question, choices branching off therefrom, and fault repair items; and
- displaying the question, the choices, and the fault repair items which are read out.

3. The method of claim 2, further comprising the step of providing a learning function for updating said fault tree by a result of a fault diagnosis.

4 — DISPLAY
SECTION

3

FAULT DIAGNOSIS
APPARATUS

5

KEYBOARD

MEMORY

3a

1

1a

1b

FAULT
DETECTING
SECTION

CONTROL
SECTION

2 — CONTROL TARGET
(PRESS MACHINE)

# FIG.1

Q1 FAULT IN CLAMP
(HYDRAULIC CLAMP) ?

A1
YES
42%

A2
NO
29%

A3 NOT
SPECIFIED
29%

Q2

Q3

Q4

%

Q5

%       %

CAUSE 1

CAUSE 2

CAUSE 3

CAUSE 4

CAUSE 5

CAUSE 6

# FIG.2

START

SELECT FUNCTION — ST1

DISPLAY ABNORMAL STATE TABLE — ST2

SELECT SPECIFIC POINT — ST3

PERFORM DIAGNOSIS PROCESSING — ST4

OBTAIN DIAGNOSIS RESULT — ST5

DISPLAY REPAIR ITEMS — ST6

# FIG.3

ABNORMAL STATE MONITOR

I/O MONITOR

7

1 DIE CLAMPER
2 DIE CUSHION
3 MB · SAFETY SHELF
4 FEEDER
5 BAR
6 SLIDE OPERATION
7 DIE CHANGE

6

4

1

5

3

DESTACKER

LOADING UNIT

HYDRAULIC SYSTEM

2

ELECTRIC
SYSTEM

LINE
OPERATION

| 1 ALARM | 2 MENU | 3 | 4 | 5 | 6 RETURN | 7 | 8 | 9 | 0 |

NEXT PAGE    KEY SWITCH

SELECTION

FIG.4

EP 0 428 134 A2

```
┌─────────────────────────────────────────────────────────────────────────┐
│  ABNORMAL STATE TABLE                                                     │
├─────────────────────────────────────────────────────────────────────────┤
│                                                                           │
│   NO. ADDRESS    NAME                                                     │
│                                                                           │
│    x x x    xxxx W1 FRONT TYPE DETECTION PLS ON / OPERATION DELAY         │
│                                                                           │
│    x x x    xxxx W2 FRONT TYPE DETECTION PLS ON / OPERATION DELAY         │
│                                                                           │
│                                                                           │
│                                                                           │
│                                                                           │
│                                                                           │
│ ─────────────────────────────────────────────────────────────────────── │
│                                                                           │
│ [1 ALARM] [2 MENU] [3    ] [4    ] [5    ] [6 RETURN] [7   ] [8   ] [9   ] [0   ] │
└─────────────────────────────────────────────────────────────────────────┘
            NEXT PAGE     KEY SWITCH                    SELECTION
```

FIG.5

EP 0 428 134 A2

---

FAULT DIAGNOSIS

QUESTION 1

Q  0001    FAULT IN "CLAMP" (HYDRAULIC CLAMP) ?

A
    1   42%        YES
    2   29%        NO
    3   29%        NOT SPECIFIED

---

SELECTION

| 1 ALARM | 2 MENU | 3 | 4 | 5 | 6 RETURN | 7 | 8 | 9 | 0 |

KEY SWITCH

SETTING

# F I G.6

EP 0 428 134 A2

FAULT DIAGNOSIS

A   0001     ADJUST POSITION OF PROXIMITY SW WHOSE ON LAMP IS NOT TURNED ON

PREVIOUS QUESTION

| 1 ALARM | 2 MENU | 3 | 4 | 5 | 6 RETURN | 7 MANUAL | 8 PATH | 9 | 0 |

KEY SWITCH

LEARNING

# FIG.7

EP 0 428 134 A2

FAULT DIAGNOSIS

METHOD OF ADJUSTING POSITION OF DIE CLAMPER
PROXIMITY SW WILL BE DESCRIBED BELOW

1) EACH PROXIMITY SW IS LOCATED AS FOLLOWS

SLIDE FRONT SURFACE

DIE CLAMPER

PLSxx  PLSxx  PLSxx  PLSxx  PLSxx

PREVIOUS QUESTION     LEARNING

| 1 ALARM | 2 MENU | 3 | 4 | 5 | 6 RETURN | 7 MANUAL | 8 PATH | 9 | 0 |

KEY SWITCH

FIG.8

```
FAULT INFERENCE

ORDER
  1      1    ADJUST POSITION OF PROXIMITY SW WHOSE ON LAMP IS NOT TURNED ON
        38%
  2      2    REPLACE PROXIMITY SW WHOSE ON LAMP IS NOT TURNED ON
        21%
  3      3    REPLACE SEQUENCER INPUT MODULE OF DIE DETECTING PROXIMITY SW
        16%
  4      7    CHECK AND REPAIR POWER SOURCE SYSTEM (e.g., BRAKER, CIRCUIT PROTECTOR, AND
        10%   DISCONNECTION) OF TRAILING EDGE DETECTING PROXIMITY SW INPUT MODULE
  5      8    CHECK AND REPAIR DISCONNECTION BETWEEN OUTPUT TERMINAL OF PROXIMITY SW
         6%   WHOSE ON LAMP IS NOT TURNED ON AND SEQUENCER INPUT MODULE TERMINAL
  6      4    REPLACE PROXIMITY SW WHOSE ON LAMP IS NOT TURNED ON
         6%
  7     10    REPLACE SEQUENCER INPUT MODULE OF TRAILING EDGE DETECTING PROXIMITY SW
         4%
  8      9    REPLACE PROXIMITY SW WHOSE ON LAMP IS NOT TURNED ON
         4%
  9      5    REPLACE PROXIMITY SW WHOSE ON LAMP IS NOT TURNED ON
         4%
 10     11    REPLACE MOUNT BASE OR INTERFACE CABLE OF SEQUENCER INPUT MODULE OF
         3%   TRAILING EDGE DETECTING PROXIMITY SW
```

| 1 ALARM | 2 MENU | 3 | 4 | 5 | 6 RETURN | 7 | 8 | 9 | 0 |

KEY SWITCH                                    SELECTION    FIG.9

EP 0 428 134 A2

START

ST41 — DIAGNOSIS PROCESSING ? — NO

YES

ST42 — DISPLAY DESIGNATED Q & A

ST43 — ANS. INPUT ? — NO

YES

ST44 — PERFORM STACK PROCESSING

ST45 — FINAL ANS. ? — NO

YES

ST46 — DISPLAY "LEARNING" KEY AS ONE OF FUNCTION KEYS

ST47 — "LEARNING" KEY ON ? — NO

YES

ST48 — FIRST TIME ? — NO

YES

ST51 — PERFORM ERROR PROCESSING

ST49 — INCREMENT NUMBER OF TIMES OF USE OF A IN ACCORDANCE WITH Q AND A IN STACK

ST50 — CALCULATE FREQUENCY AGAIN

END

F I G.10

START

SELECT FUNCTION — ST1

DISPLAY ABNORMAL
STATE TABLE — ST2

SELECT SPECIFIC POINT — ST3

DISPLAY CAUSE TABLE — ST4

SELECT ONE CAUSE — ST5

DISPLAY REPAIR ITEMS — ST6

# FIG.11